Europäisches Patentamt

European Patent Office

Office européen des brevets

(11) Publication number: **0 472 425 B1**

# EUROPEAN PATENT SPECIFICATION

(45) Date of publication of patent specification: **12.10.94**  (51) Int. Cl.⁵: **B60C 9/22**, B60C 9/20

(21) Application number: **91307711.1**

(22) Date of filing: **21.08.91**

(54) **Radial tyre.**

(30) Priority: **24.08.90 JP 223392/90**
**16.07.91 JP 202332/91**

(43) Date of publication of application:
**26.02.92 Bulletin 92/09**

(45) Publication of the grant of the patent:
**12.10.94 Bulletin 94/41**

(84) Designated Contracting States:
**DE FR GB**

(56) References cited:
**BE-A- 544 341**
**DE-A- 3 734 700**
**FR-A- 2 405 148**
**GB-A- 2 061 202**

(73) Proprietor: **SUMITOMO RUBBER INDUSTRIES LIMITED**
**1-1 Tsutsuicho 1-chome**
**Chuo-ku**
**Kobe-shi Hyogo-ken (JP)**

(72) Inventor: **Suzuki, Shigehiko**
**15-1-109, Minami Mukonoso 7-chome**
**Amagaseki-shi, Hyogo-ken (JP)**
Inventor: **Okada, Ryozo**
**11-1, Gotenyama 3-chome**
**Takararuzuka-shi, Hyogo-ken (JP)**

(74) Representative: **Stewart, Charles Geoffrey**
**SP TYRES UK LIMITED**
**Tyre Technical Division**
**Fort Dunlop, Erdington, Birmingham B24 9OT (GB)**

## Description

The present invention relates to a belted radial ply tyre, and more particularly an improvement in the belt structure.

To provide a strong hoop reinforcement for a tyre tread region, belt reinforcements known as the "endless band" type made of spirally wound cords have been proposed.

In Japanese Patent Publication No.51-55505 (JP-A-51-55505), a tyre according to the preamble of claim 1 is disclosed. The belt is formed by spirally winding a ribbon of rubber, in which reinforcing cords are embedded, around the carcass. In the ribbon at least 8 cords are embedded, and the width of the ribbon is 5 to 50 mm. Such a ribbon has relatively wide ends each of which cause a large localised change in the belt rigidity in the circumferential direction of the tyre.

In Japanese Patent Publication No.61-85203 (JP-A-61-85203), a belt reinforcement formed by spirally winding two ribbons is disclosed. Therefore, in comparison with the above-mentioned belt, the time to make the belt can be reduced. However, as the two ribbons are wound each from the tyre equator toward one tread edge, two ribbon ends are placed at the tyre equator, and one end is placed in each tread edge portion. Those four ends each locally change the belt rigidity and disturb the tyre uniformity.

Especially, in motorcycle tyres which are used at high speed, such an unbalanced arrangement becomes a serious problem. For example, deterioration in the running stability especially during cornering, deterioration in ride comfort and the like.

It is therefore, an object of the present invention to provide a radial tyre in which rigidity variation in the tyre circumferential direction is reduced and tyre uniformity is improved to improve running stability and durability.

According to one aspect of the present invention, a radial tyre comprises a toroidal carcass extending between beads and turned up around bead cores, and a belt reinforcement disposed radially outside the carcass and inside a tread, wherein the belt reinforcement comprises a band layer formed by plural ribbons of rubber in which one cord or two parallel cords are embedded, the ribbons are wound spirally to be arranged side by side, the ends of the ribbons are located at the edges of the band layer, and at each of said edges of the band layer the ends of the ribbons are shifted equally in the circumferential direction of the tyre around the axis of the tyre.

Preferably the ribbons are wound continuously from one edge to the other edge of the tread.

The belt reinforcement may comprise at least two plies and a bad layer over said two plies.

Embodiments of the present invention will now be described by way of example only in conjunction with the accompanying drawings, in which:

Fig.1 is a cross sectional view of a motorcycle radial tyre according to the present invention;

Fig.2 is an enlarged perspective view of a ribbon;

Fig.3 is a sectional view of a method of winding the ribbons or belt cords;

Fig.4 is a schematic plan view of the band lager separately showing the spirally wound arrangement of the ribbons;

Fig.5 is a perspective view of the separated band cords to show the positions of the ends thereof; and

Fig.6 is a cross sectional view of a radial tyre for four-wheeled vehicle showing another embodiment of the present invention.

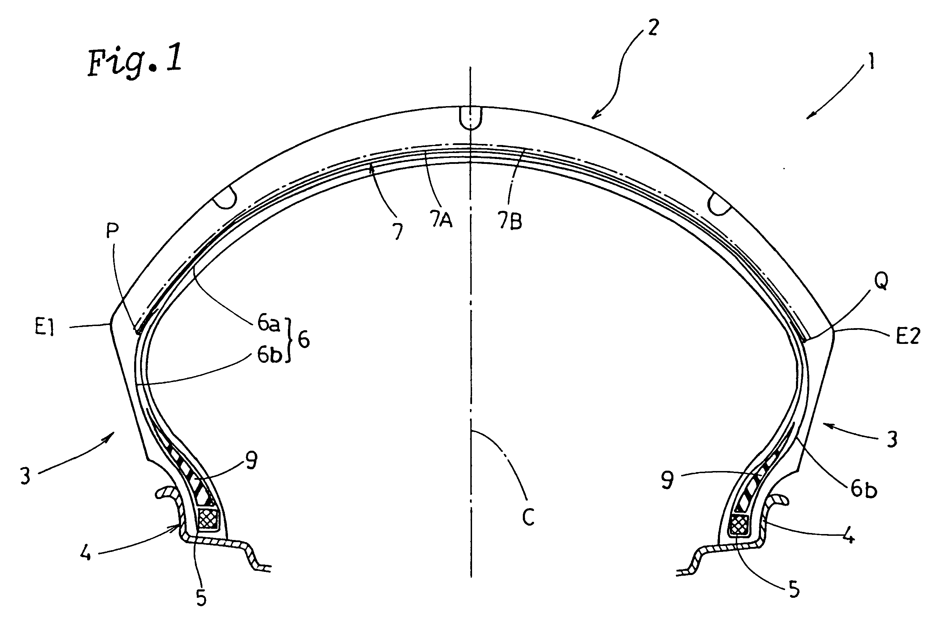

In Figs.1 to 5, a motorcycle radial embodiment tyre 1 has a tread 2, axially spaced bead portions 4, and sidewalls 3 extending radially inwardly from the tread edges to the bead portions 4. A bead core 5 is disposed in each bead portion 4, and a carcass 6 extends between the bead portions 4 around the tyre and having edges turned up around the bead cores 5 from the axially inside to the outside thereof to form two turned up portions 6b and one main portion 6a therebetween.

A bead apex 9 is disposed in each bead portion 4 between each turned up portion 6b and the main portion 6a of the carcass, said apex 9 extends radially outwardly and taperingly from the bead core 5.

The bead 2 is reinforced by a belt reinforcement composed of only a band layer 7 disposed radially outside the carcass 6.

The tread 2 is curved so as to have a single radius of curvature and extends so that the tread width between the tread edges E1 and E2 is the maximum width of the tyre.

The carcass 6 comprises at least one ply, in this embodiment one ply, of cords arranged radially of the tyre at an angle of 60 to 90 degrees with respect to the tyre equator C.

For the carcass cords, organic fibre cords, e.g. nylon, rayon, polyester, aromatic polyamide or the like can be used. In this embodiment nylon fibre cords are used.

The edge of each turned up portion 6b of the carcass 6 is extended into the tread shoulder portion to be secured between the band edge and the carcass 6a.

2

The band layer 7 is formed on the radially outside the carcass 6a by spirally winding ribbons 10 around the carcass 6a.

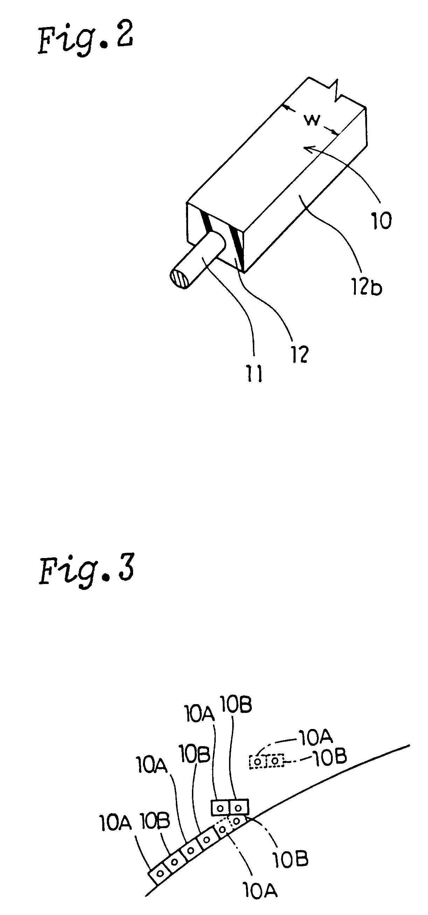

In the ribbon 10, a single cord or two parallel cords 11 are embedded in covering rubber 12 along the length of the ribbon as shown in Fig.2.

For the band cords 11, organic fibre cords, e.g. nylon, aromatic polyamide, polyester or the like, and/or steel cords can be used.

Preferably, a cord having a modulus of not less than 600 kgf/sq.mm is used.

The ribbon 10 in this example in which one cord is embedded has a rectangular sectional shape.

To make the band 7, plural ribbons 10 are wound spirally while being drawn up in plural lines.

Thus a plurality of ribbons are wound mutually parallel.

For example, as shown in Figs.3-5, two ribbons 10A and 10B, in which one cord is embedded, are wound simultaneously and continuously from points P near one tread edge E1 to points Q near the other tread edge E2 across the tyre equator C in the same winding direction.

Further, the ribbons are wound so as to lie closely together to form a continuous-sheet-like band layer.

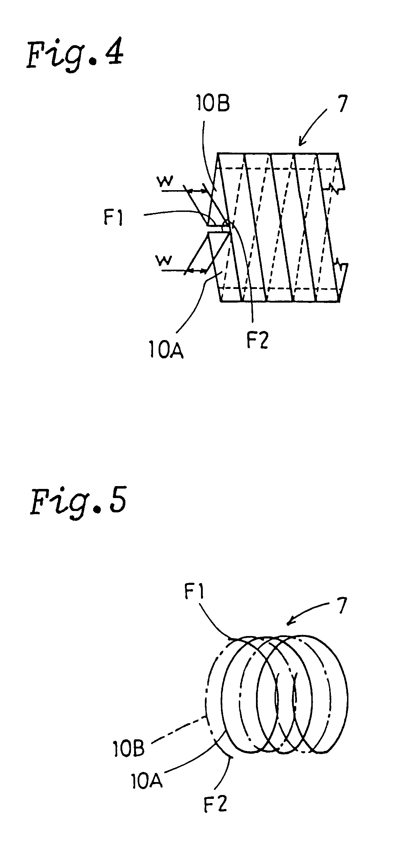

The ends F1 and F2 of the ribbons 10A and 10B located in each tread edge region are shifted or displaced so that they are spaced apart equally in the circumferential direction of the tyre around the axis of the tyre as shown in Fig.4.

In this example the pitch angles which angles give the circumferential positions for the ribbon ends are 180 degrees. If three ribbons are used, the pitch angles are 120 degrees, and if four, 90 degrees.

By circumferentially shifting the ends, the small fluctuations of rigidity are distributed around the tyre.

As the belt reinforcement in this embodiment is composed of only one band layer, the bending rigidity of the tread portion 2 is minimised, while providing a strong hoop effect. Thus the ride comfort, high speed durability and running stability are improved, while the camber stiffness which is required for cornering of a motorcycle is improved.

Test tyres of size 170/60R 17 having the tyre structure shown in Fig.1 and detail specifications shown in Table 1 were made and tested for the following performance properties.

High speed Durability

The test the running speed was increased every 20 minutes in steps of 10 km/H from an initial speed of 160 km/H. The speed at which any tread failure occurred was measured as the high speed durability. The test was carried out at maximum load and at regular pressure, the test being as specified in JIS (Japanese Industrial Standard), using a drum tyre tester.

The results are indicated as an index based on the assumption that the reference tyre 1 is 100. The larger the value, the better the durability.

Wear Resistance

Using a drum tester, running at a speed of 80 km/H under 150% of the maximum load and at the regular pressure specified in JIS, the total running distance till the amount of wear reached to 30% of the groove depth of the tread grooves formed in the tread central region, was measured. The results are indicated by an index based on the assumption that the reference tyre 1 is 100. The larger the value, the better the wear resistance.

Manoeuvrability and Ride comfort

While running a motorcycle on a straight course at 260 km/H and on a 400m radius course at 220 km/H, manoeuvrability and ride comfort were evaluated by a test driver.

The results are indicated by an index. The larger the value, the better the resistance.

Camber Stiffness

While chaging the camber angle to be 8, 16, 24, 32 and 40 degrees, the camber thrust was measured at an inflation pressure of 2.9 kgf/sq.cm and a tyre load of 145 kg, and the camber stiffness at each camber angle was computed therefrom, and then the mean value thereof was also computed. The mean values for the respective tyres are indicated by an index. the larger the index, the better the performance.

Band making Time

The time required to make the band of each test tyre exclusive of time for incidental works, is indicated by an index based of the assumption that the reference tyre 2 is 100.

Thus as apparent from the test results, the working example motorcycle tyres were improved in high speed durability, ride comfort, manoeuvrability and running stability in comparison with the reference tyres.

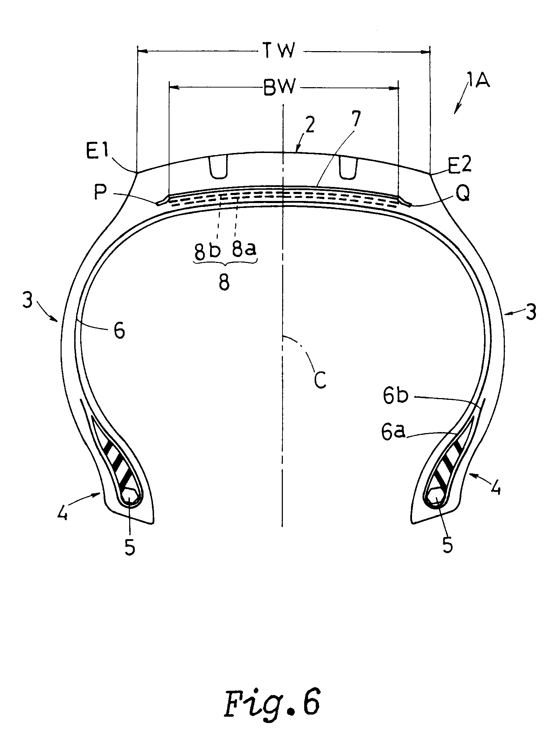

Next a four wheel vehicle embodiment will be described in relation to Fig. 6 in which a carcass 6 extends between bead portions 4 through a tread 2 and sidewalls 3 being turned up around bead cores 5 from the axially inside to outside thereof to form two turned up portions 6b and a main portion 6a therebetween. The carcass 6 comprises at least one ply, in this embodiment one ply, of cords arranged radially at an angle of 60 to 90 degrees with respect to the tyre equator C.

For the carcass cords, the above-mentioned organic fibre cords or steel cords may be used.

In this embodiment, the belt reinforcement further includes a breaker 8 in addition to a band layer 7 having a similar structure to the above.

The breaker 8 is disposed radially outside the carcass 6, and the band 7 is disposed radially outside the breaker 8.

The breaker 8 comprises at least 2 plies, in this embodiment 2 plies 8a and 8b, of parallel cords laid at 15 to 70 degrees with respect to the tyre equator C so that the cords in each ply cross the cords of the other ply.

For the breaker cords, organic fibre cords, e.g. nylon, rayon, polyester, aromatic polyamide or the like, and/or steel cords may be used.

The width BW of the breaker 8 is 0.8 to 0.95 times the tread width TW.

The band 7 in this embodiment is formed by winding ribbons spirally around the breaker so as to completely cover the outside of the breaker 8. The band width is larger than the breaker width BW. Therefore, breaker edge separation or looseness is effectively prevented, and the durability of the tread portion 2 is improved.

The ribbons may be wound in the same manner as the above-mentioned embodiment. The ends of the ribbons are equally shifted and spaced apart in the circumferential direction of the tyre at each edge of the band.

Incidentally, in the motorcycle tyre 1 of the first embodiment the belt reinforcement may include a breaker as in the second embodiment. Further, in the radial tyre 1A for a four-wheeled vehicle, the breaker layer 8 may be omitted from the belt reinforcement.

Further, the band 7 may be provided with a two-layered structure by disposing a layer 7B of wound ribbons radially outside the innermost layer 7A as shown in Fig.1 by a chain line. In this case, the winding direction in the outer layer 7B may be reversed to that in the inner layer 7A.

The ends of all of the ribbons in the outer and inner layers are equally shifted or spaced in the circumferential direction around the tyre. Further, when ribbons in the same number, for example two ribbons, are used in each layer, the shifting or spacing is preferably such that the ends of the ribbons in the inner lager and the ens of the ribbons in the inner layer alternately appear at each band edge.

As explained above, in the radial tyres of the present invention, at each edge of the band, the ends of the ribbons which are wound spirally to form the band, are shifted or spaced equally in the circumferential direction of the tyre. Therefore, fluctuation in the tyre circumferential direction of the tyre, of the rigidity at the tread edge is reduced, and tread uniformity is improved, and further durability and running stability are improved.

The above-mentioned shifting of ribbon ends can be applied to a band formed by plural wound ribbons discontinuous between the edges of the band. In this case, for example, the ribbons can be wound starting from both of the tread edges E1 and E2 to the tyre equator C. The ribbon ends are equally shifted in the circumferential direction of the tyre at each tread edge as explained above, and at the tyre equator the ends of the ribbons on one side of the equator are preferably joined with those of the ribbons on the other side of the equator. Therefore, it is not always necessary to shift the ends at the tyre equator.

4

TABLE 1

| | Ex.1 | Ex.2 | Ex.3 | Ex.4 | Ref.1 | Ref.2 | Ref.3 | Ref.4 |
|---|---|---|---|---|---|---|---|---|
| Carcass<br> Cord<br> Cord Angle | 1 ply<br>Nylon (840d/2)<br>90 degrees to tire equator | | | | | | | |
| Band<br> Cord<br> Topping rubber | Aromatic polyamide (1500d/2)<br>100% modulus = 50 kgf/sq.cm | | | | | | | |
| No. of Ribbon | 2 | 4 | 4 | 2 | 1 | 1 | 1 | 2 |
| No. of Cord/Ribbon | 1 | 1 | 2 | 2 | 1 | 2 | 1 | 2 |
| Winding Method *1 | 2SC | 4SC | 4SC | 2SC | 1C | 1C | 1C | 2SD |
| Breaker<br> Cord<br><br><br> Cord angle | non | non | non | non | non | non | 2ply<br>Nylon<br>1260d/2<br><br>13 deg. | 2ply<br>Aromatic<br>Polyamide<br>1500d/2<br>20 deg. |
| Test Results<br> Durability | | 105 | 105 | 105 | 103 | 100 | 100 | 105 | 105 |
| Wear Resistance | 105 | 105 | 103 | 105 | 100 | 100 | 110 | 110 |
| Ride comfort | 105 | 110 | 108 | 105 | 100 | 100 | 100 | 100 |
| Maneuverability | 110 | 115 | 110 | 105 | 110 | 110 | 80 | 80 |
| Chamber Stiffness | 120 | 120 | 120 | 120 | 120 | 120 | 100 | 100 |
| Band making Time | 100 | 50 | 25 | 50 | 200 | 100 | 200 | 50 |

*1)
2SC: winding two ribbons simultaneously and continuously from edge to edge
4SC: winding four ribbons simultaneously and continuously from edge to edge
1C:  winding one ribbon continuously from edge to edge
2SD: winding two ribbons simultaneously, but each from center to each edge

Claims

1. A radial tyre comprising a toroidal carcass (6) extending between beads (4) and turned up around bead cores (5), and a belt reinforcement disposed radially outside the carcass (6) and inside a tread (2), characterised in that said belt reinforcement comprises a band layer (7) formed by plural ribbons (10) of rubber in which one cord or two parallel cords are embedded, the ribbons (10) being wound spirally and arranged side by side, the ends of the ribbons (10) being located at the edges (P,Q) of the band layer (7), and at each of said edges (P,Q) of the band layer (7) the ends of the ribbons (10) being shifted or spaced apart equally in the circumferential direction of the tyre.

2. A tyre according to claim 1, characterised in that the ribbons (10) are wound continuously from one edge (P or Q) to the other edge (Q or P) of the tread (2).

3. A tyre according to claim 1, characterised in that said belt reinforcement is composed of only said band layer (7).

4. A tyre according to claim 1 or 2, characterised in that said belt reinforcement further comprises a breaker (8) comprising at least two plies with the cords of one ply carrying the cords of the other ply and said band layer (7) is disposed radially outside the breaker (8).

5. A tyre according to any of claims 1, 2 or 4, characterised in that said belt reinforcement further comprises a second band layer formed radially outside the first radially inner band layer (7) by winding ribbons spirally, and the ends of all of the ribbons in the second outer and first inner band layers are equally shifted or spaced apart around the tyre axis at each tread edge (P,Q).

6. A tyre according to claim 5, characterised in that the winding direction in the outer band layer is reversed to that in the inner band layer (7).

7. A tyre according to claim 6 or 7, characterised in that at each tread edge (P,Q), the ends of the ribbons (10) in the inner layer and the ends of the ribbons in the outer layer appear alternately.

**Patentansprüche**

1. Ein Radialreifen mit einer toroidalen Karkasse (6), die sich zwischen Wülsten (4) erstreckt und um Wulstkerne (5) geschlagen ist, und einer Gürtelverstärkung, die radial außerhalb der Karkasse (6) und innerhalb einer Lauffläche (2) angeordnet ist,
dadurch **gekennzeichnet**,
daß die Gürtelverstärkung eine Bandschicht (7) umfaßt, die durch plurale Bänder (10) aus Gummi, in welchem ein Cord oder zwei parallele Corde eingebettet sind, gebildet ist, wobei die Bänder (10) spiralartig gewickelt und Seite an Seite angeordnet sind, die Enden der Bänder (10) an den Rändern (P, Q) der Bandschicht (7) angeordnet sind und bei jedem der Ränder (P, Q) der Bandschicht (7) die Enden der Bänder (10) in gleicher Weise in der Umfangsrichtung des Reifens verschoben oder beabstandet sind.

2. Ein Reifen nach Anspruch 1,
dadurch **gekennzeichnet**,
daß die Bänder (10) kontinuierlich von einem Rand (P oder Q) zu dem anderen Rand (Q oder P) der Lauffläche (2) gewickelt sind.

3. Ein Reifen nach Anspruch 1,
dadurch **gekennzeichnet**,
daß die Gürtelverstärkung aus nur der Bandschicht (7) zusammengesetzt ist.

4. Ein Reifen nach Anspruch 1 oder 2,
dadurch **gekennzeichnet**,
daß die Gürtelverstärkung weiter einen Breaker (8) mit zumindest zwei Lagen umfaßt, wobei die Corden von einer Lage die Corden der anderen Lage tragen, und daß die Bandschicht (7) radial außerhalb des Breakers (8) angeordnet ist.

5. Ein Reifen nach einem der Ansprüche 1, 2 oder 4,
dadurch **gekennzeichnet**,
daß die Gürtelverstärkung weiter eine zweite Bandschicht umfaßt, die radial außerhalb der ersten radial inneren Bandschicht (7) gebildet ist, indem die Bänder spiralartig gewickelt sind, und die Enden von allen der Bänder in den zweiten äußeren und ersten inneren Bandschichten in gleicher Weise um die Reifenachse bei jedem Laufflächenrand (P, Q) verschoben oder voneinander beabstandet sind.

6. Ein Reifen nach Anspruch 5,
dadurch **gekennzeichnet**,
daß die Wicklungsrichtung in der äußeren Bandschicht zu jener in der inneren Bandschicht (7) umgekehrt ist.

7. Ein Reifen nach Anspruch 6 oder 7,
dadurch **gekennzeichnet**,
daß bei jedem Laufflächenrand (P, Q) die Enden der Bänder (10) in der inneren Schicht und die Enden der Bänder in der äußeren Schicht alternierend erscheinen.

**Revendications**

1.  Pneumatique à carcasse radiale comprenant une carcasse toroïdale (6) disposée entre des talons (4) et repliée autour de tringles (5), et une armature de ceinture disposée radialement à l'extérieur de la carcasse (6) et à l'intérieur d'une bande de roulement (2), caractérisé en ce que l'armature de ceinture comprend une couche (7) d'une bande formée de plusieurs rubans (10) de caoutchouc dans lesquels un ou deux câblés parallèles sont enrobés, les rubans (10) étant enroulés en spirale et placés côte à côte, les extrémités des rubans (10) étant disposées aux bords (P, Q) de la couche de bande (7) et, à chacun des bords (P, Q) de la couche de bande (7), les extrémités des rubans (10) sont décalées ou espacées également dans la direction circonférentielle du pneumatique.

2.  Pneumatique selon la revendication 1, caractérisé en ce que les rubans (10) sont enroulés de façon continue d'un bord (P ou Q) vers l'autre bord (Q ou P) de la bande de roulement (2).

3.  Pneumatique selon la revendication 1, caractérisé en ce que l'armature de ceinture est composée de la couche de bande (7) seulement.

4.  Pneumatique selon la revendication 1 ou 2, caractérisé en ce que l'armature de ceinture comporte en outre une nappe sommet (8) comprenant au moins deux nappes, les câblés d'une nappe recoupant les câblés de l'autre nappe, et la couche de bande (7) est disposée radialement à l'extérieur de la nappe sommet (8).

5.  Pneumatique selon l'une quelconque des revendications 1, 2 et 4, caractérisé en ce que l'armature de ceinture comporte en outre une seconde couche de bande formée radialement à l'extérieur de la première couche de bande (7) qui est radialement interne, par enroulement de rubans en spirale, et les extrémités de tous les rubans de la seconde couche externe et de la première couche interne de bande sont décalées ou espacées également autour de l'axe du pneumatique à chaque bord de la bande de roulement (P, Q).

6.  Pneumatique selon la revendication 5, caractérisé en ce que la direction d'enroulement dans la couche externe de bande est inverse de celle de la couche interne de bande (7).

7.  Pneumatique selon la revendication 5 ou 6, caractérisé en ce que, à chaque bord de bande de roulement (P, Q), les extrémités des rubans (10) de la couche interne et les extrémités des rubans de la couche externe apparaissent en alternance.

*Fig.1*

EP 0 472 425 B1

*Fig.2*

*Fig.3*

## Fig.4

## Fig.5

Fig.6